# EUROPEAN PATENT SPECIFICATION

(11) **EP 1 253 551 B1**
(45) Date of publication and mention of the grant of the patent: **12.07.2006**
(21) Application number: 02252565.3
(22) Date of filing: 10.04.2002
(51) Int. Cl.: G06K 19/06

(54) **Incorporating data in hardcopy correspondence**
Aufbringen von Daten auf einer Papiernachricht
Incorporer des données provenant dans une correspondence imprimée

(30) Priority: 24.04.2001 US 841803
(43) Date of publication of application: 30.10.2002
(73) Proprietor: Hewlett-Packard Company, Palo Alto, CA 94304 (US)
(72) Inventor: Jones, Michael J., Corvallis, OR 97330 (US)
(74) Representative: Jackson, Richard Eric

(56) References cited:
- EP-A- 0 928 986
- WO-A-99/04368
- US-B1- 6 176 427

## Description

### BACKGROUND:

The present invention generally relates to printing on a hardcopy medium and more particularly relates to printing data on one side of a hardcopy correspondence medium opposite a side upon which is disposed a picture or graphic.

Printing devices that are conventionally coupled to a computer have evolved from a physical striking apparatus, like letter keys and wire pin matrices, to higher resolution and often color implementations such as inkjet, electrostatic, and liquid electrostatic printing technologies. Higher printer resolution has enabled much cleaner and crisper text to be printed as well as images and graphics that rival photographic reproductions. Higher printer resolution has also enabled data to be printed as a dense pattern of printed marks on a receptive medium, such as paper. One example of such data printing can be found in US Patent Application No. 09/556,965 filed on April 20, 2000 in behalf of Michael J. Jones and titled "Printed Medium Data Storage".

In US Patent No. 5,905,819 the art of steganography was identified as a precursor to the desire to hide a digital message within a printed image. Digital steganography was interpreted as encompassing techniques of tamper-proofing (providing the ability to determine whether a digital image has been manipulated or modified from an original), digital watermarking (providing the ability to establish ownership and copyright infringement), image tagging (adding a unique identifier to each image copy to identify the individual creating bootleg copies), digital pointers (providing, for example, an invisible internet address for additional information), and data augmentation (providing, in a form relatively undetectable by human perception, additional information regarding the image in which the data is hiding). The identified patent discloses a complex method of combining the desired image and the data in a manner which disturbs the desired image very little.

US Patent No. 5,829,895 uses a two-pass dot matrix printing method to place a postal indicia on an envelope. A first pass places a message in the printed postal indicia by adjusting the dot matrix dot density to create a lightly populated dot density, thereby enabling the message to be readable due to the low population of dots. A second printing pass places a higher dot density in the previously low dot population density area in order to obliterate the message. Postal franking fraud can thereby be avoided.

InfoImaging Technologies, Inc. markets a product called 3D FaxFile. This product converts digital documents (text, color images, etc.) into a digital black and white pattern of marks that can be transmitted via a standard fax machine. At the receiving end, the faxed document can be scanned or otherwise reconverted into a digital data stream that is subsequently recomposed into a copy of the original document. Coding and data compression can yield a secure and significantly smaller document to be faxed than the original.

The foregoing details of technology notwithstanding, people often wish to communicate in a simple, inexpensive, and tangible way. Take, for example, the common postcard. An individual wishes to share an experience with another, a picture of a place visited on one side and a handwritten message on the other. The time-honored postcard with an inexpensive postage stamp provides the answer. Also, groups of people with a common hobby often use two sided cards to convey information. QSL cards are used by the amateur radio community to confirm radio communications and have a picture or graphic on one side of the card and confirmation information printed or written on the other. A simple two sided card should be able to share a richer variety of information and experience than that previously available.

### SUMMARY:

The invention is set out in claims 1, 5 and 10.

### BRIEF DESCRIPTION OF THE DRAWINGS:

FIG. 1 is a block diagram of an apparatus which may employ the present invention.
FIG. 2 is a simplified sketch of a further processing kiosk which may employ the present invention.
FIG. 3 is a flowchart of a process which may be employed in the kiosk of FIG. 2.
FIG. 4 is a flowchart of the process of image input selection which may be employed in the process of FIG. 3.
FIG. 5 is a flowchart of the process of audio input selection which may be employed in the process of FIG. 3
FIG. 6 is a flowchart of the process of data input source selection which may be employed in the process of FIG. 3.
FIGs. 7A and 7B are examples of a hardcopy output medium which may employ the present invention.
FIG. 8 is an illustration of an encoded and printed data file which may be employed in the present invention.

### DETAILED DESCRIPTION OF A PREFERRED EMBODIMENT:

The present invention relates to a hardcopy medium including a picture or graphic on a first side of the medium and an encoded and printed data file on the other side of the medium. One can appreciate the utility of being able to include a more extensive data file including, for example, a word processing document, a computer image file, or a computer sound data file on the address side of a hardcopy medium such as a postcard.

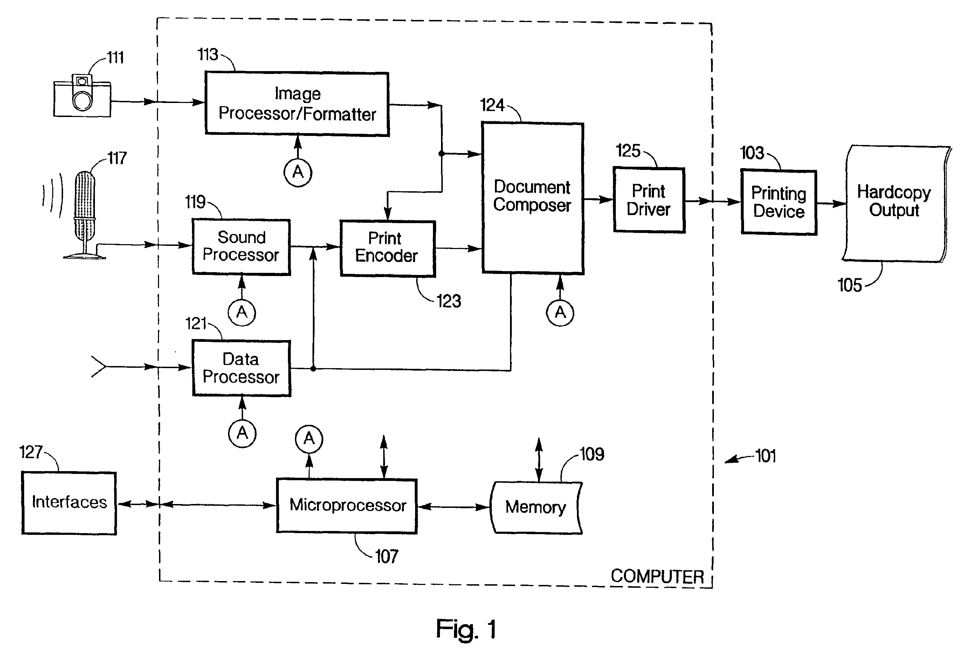

An apparatus employing the present invention and used to produce such a medium is illustrated in the block diagram of FIG. 1. A computer 101 acts as the controlling element and a printing device 103, which in a preferred embodiment may be a duplex printer such as an HP970Cxi inkjet printer, deposits marks on a hardcopy output medium 105. Conventionally disposed within the computer 101 is a microprocessor 107 and memory 109 that cooperate to accept commands and input, process the input in accordance with stored instructions, and generate printing and control information for the printing device 103.

One form of input comes from a generator of images 111, which in a preferred embodiment is a digital camera. Typically, a digital camera converts a visible image, in the form of light impinging upon a photon-to-electron transducer, into a digital data file comprising binary bits stored as a computer recognizable bit format such as a TIFF (Tagged Image File Format) file in a memory within the digital camera. When coupled to the computer 101, the digital camera, i.e. image generator 111, is called upon to upload one or more image files to the computer 101. In a preferred embodiment, the computer accepts the image files into an image processor/formatter 113 that converts the digital camera files format into TIFF files (if the files are not already in that format) and presents the uploaded image, or a thumbnail grouping of images, on a computer display device for the user to take action. This user action is often a selection of an image for printing on one side of the hardcopy output medium 105. The user may then further process the image by cropping, color enhancement, and other processes generally available for image enhancement in the image processor/formatter 113 for delivery of a processed image digital file to the printing device 103.

It is a feature of the present invention that additional information may be placed on another side of the hardcopy output medium 105. A postcard offers a person the opportunity to write a few words on the reverse side of a picture; the space available is usually not enough for a long handwritten message. In one implementation, a computer and printer place marks of a single color, usually black, as pixels for relatively low density data storage on the medium. In a preferred embodiment, 8Kbytes of information are printed in an area of 645 mm² (1 in²) on the reverse of the hardcopy output medium. For an intermediate density data storage, superpixels of a single color are used to produce "gray" shades and a higher data storage density. In yet another implementation, where color is used for the marks in superpixels, the amount of information stored by printed marks increases to 64Kbytes of information in the 645 mm² (1 in²) area. This is enough hardcopy storage to incorporate a useful amount of digitally compressed audio, high resolution image data, or file storage. Thus, one may input sound from a source of audio 117, which if it is not already in digital form, is converted to digital form and encoded into an audio standard such as MPEG-1 audio layer 3 (MP3) or MPEG-1 audio layer 2 (MP2) in the sound processor 119. Alternatively or in addition to the audio, other computer files can be input and processed, in the data processor 121, to provide compressed data files for storage on the hardcopy output. Such computer files can be text that is input to a word processing program and stored in a conventional word processing form. In a single color preferred embodiment, as many as 12 characters per square millimeter (8K characters per square inch) can be stored on the hardcopy output, providing even a prolix postcard writer ample space in this implementation of the hardcopy output. Another of the computer files that can be input to or created in the data processor 121 can be a digital file of the picture or graphic to be printed on the front side of the hardcopy output, thus giving the receiver of the hardcopy an opportunity to recreate additional high fidelity copies of the picture or graphic. Postcard addressing information can also be input by the user and printed on the reverse side but without being encoded.

As noted above, superpixels enable gradations of intensity and hue in gray scale printing and color image printing that offer a wide palette of color and the ability for significant print storage of information. A superpixel is generally recognized to be a coordination of an area (the superpixel) of the printed medium, usually a theoretical square that is subdivided into smaller square areas. Into each of the smaller areas (referred to as pixels) a dot can be placed, or left unplaced, depending upon the level of gray scale or the color to be realized for the superpixel. See, for example, US Patent No. 4,930,018. The range of colors can be a single identifiable color such as black or cyan, a color gamut that can be separable into digitally encodable colors (for example 2²⁴ combinations of yellow, cyan, and magenta inks, commonly known in inkjet printing), shades of gray (commonly referred to in printing as grayscale), or colors that are imperceptible to humans (such as those having reflectance or absorption in infrared or ultraviolet).

Returning to FIG. 1 and considering a preferred embodiment, the image processor/formatter 113 is realized in a commercially available applications program such as Adobe Photoshop^{™} 6.0 or Microsoft PowerPoint. The sound processor 119 is realized as an application program such as Microsoft Windows Sound Recorder and, for text input, the data processor 121 is realized as a Microsoft Word applications program. Each is invoked by the user from the computer interfaces 127 to commence operation and to input formatting and other user authoring information. User formatting and processing commands are represented by interconnections "A" between elements. The user interfaces 127 are typically a keyboard, a computer monitor, and a mouse but can easily include common peripherals like speakers, a sketch tablet, and the like.

To produce the stored information, the user accesses a print encoder 123, an applications program such as Intacta Express^{™} Encoder (available from Intacta Technologies, Inc.), to accept the files from the sound processor 119 and the data processor 121, and encode the files into a pattern of printable marks. Once printed these marks are machine readable for regeneration of the encoded files. If it is desired that an image file be encoded into the printed storage, an output file from the image processor 113 may be coupled to the print encoder 123. In a preferred embodiment, all of the information files are interwoven in the print pattern of marks for improved error correction. The encoded pattern of marks is then output to a document composer 124, realized with an applications program such as Mpower^{™} offered by Bitstream Corp. Document composer 124 positions the encoded files, the image file, non-encoded text (such as a postcard address), and other printable material on the hardcopy output medium. The final product of this effort is then output to a print driver 125 for coupling to the printing device 103. The print driver 125 converts the document composer 124 output into a page description language, e.g. Adobe PostScript^{™} or Hewlett-Packard Printer Control Language (PCL), which can be understood by the printing device 103. A raster image processor, generally in the printing device 103, but which may also be implemented within the print driver 125 in low-cost systems, converts the digital document representation into a rasterized form which is then processed by the printing device. The printing device, in a preferred embodiment, ejects ink drops in accordance with the information output from the print driver 125, to produce the final printed hardcopy output 105.

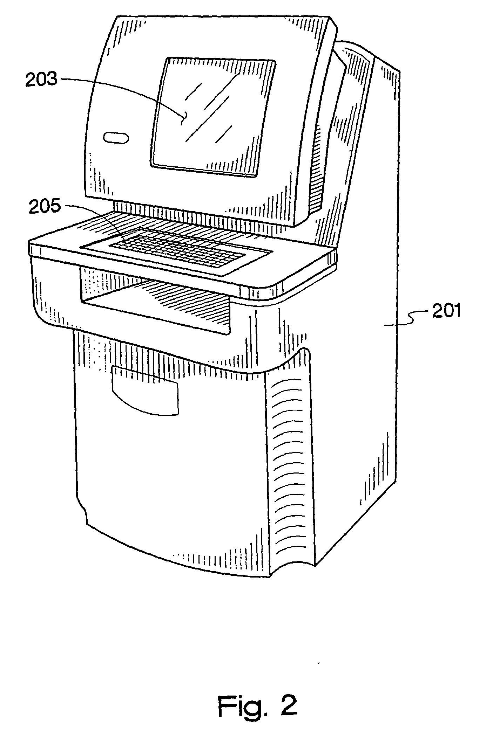

An alternative embodiment employing the present invention may be deployed in a commercial environment. Photographic film development mini-labs have become common in multipurpose drugstores and large retail stores. Further developments in conventional film mini-labs have resulted in very rapid photographic film development, conversion to digital image, and image printing. The present invention offers an auxiliary product in the nature of a further processing kiosk. A simplified sketch of a kiosk offering the present invention is shown in FIG. 2. A computer configuration similar to that described above with high duty cycle hardware is employed by the kiosk.

The desired output from a kiosk 201 like that shown in FIG. 2 is a hardcopy output such as a custom postcard or string of pictures having auxiliary information printed in an encoded format on the hardcopy output. Inputs to the kiosk include images, audio, keyboard, computer, and transaction payment. Users couple a digital camera or a video camera to an input connector, preferably an IEEE 1394 port (although other standard ports can be employed), so that the image data files or the digital video can be uploaded to a computer arrangement in the kiosk computer similar to that described above. Analog video cameras are accommodated with composite video or S-video inputs and conventional frame capture to obtain a single image for printing from either analog or digital video. The scanned images from conventional photographic film, either performed during a single event with the user or input from a storage medium like a Picture CD^{™}, are also available as input. Additionally, a library of digital images is available for use in selecting an image to be printed on the hardcopy output - a feature of particular interest when the kiosk is placed in a location frequented by tourists. In advanced versions of the kiosk, a digital camera is integrated into the kiosk so that pictures can be taken from the kiosk, itself. Suitable and interesting background can be provided by the kiosk owner in this instance.

In any event, the user is presented with a display of images from which to choose. This display, presented on a touch screen computer monitor 203 in the alternative embodiment, is preferably a matrix of thumbnail images but can also be a "slide show" of images presented in full-screen format. The user may then choose an image from the image display for further processing and eventual printing. The images are each given a unique identifier (if they have not already been designated from the image source) and the user selects the image identifier preferably via the touch screen monitor 203 but alternatively via a keyboard 205. The kiosk monitor 203 presents a full-screen version of the image and offers the user an opportunity to enhance the image and to select the best crop for placement on the hardcopy output.

Audio input comes from the digital camera or the video camera or from independent analog and digital audio playback devices, each of which may be coupled to the kiosk via conventional connectors. Audio sound recordings, including sounds of particular local interest like waterfalls, crowd noises, etc. and perhaps coordinated with a selected library image as well as prerecorded background music, are made available for the user to select. Again, an advanced version of the kiosk includes an integral microphone to record audio at the kiosk. The audio from the source selected by the user's touch on the touch screen monitor 203, which may be in analog format or digital format (MP3, for example), is converted to MP2 digital form (if it is not already so) in preparation for encoding and printing on the hardcopy output.

A hardwire USB port is the primary input for a user's computer to be coupled to the kiosk, although an infrared or a IEEE 802.11B wireless connection or both may also be provided. The user may upload a computer file containing a text or other message. If the user desires to compose a message on the fly, the keyboard 205 provides the means to enter an impromptu message for encoding and printing on the hardcopy output.

The creation of the hardcopy output is paid for, in an alternative embodiment, by credit card. The user, prior to the input of images and other data, reads the list of charges for various services and options available, including the option of prepayment of the postage necessary for a postcard. The user then selects the services desired, including paying for postage if that option is available, and swipes a credit card through a card reader. Thus, transaction approval is sought and granted in conventional fashion.

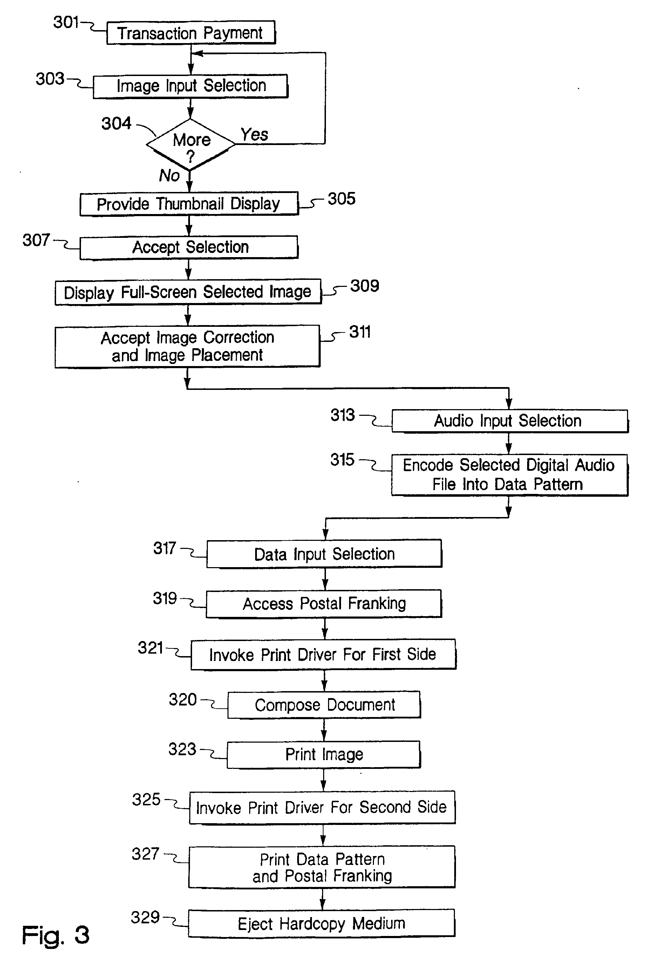

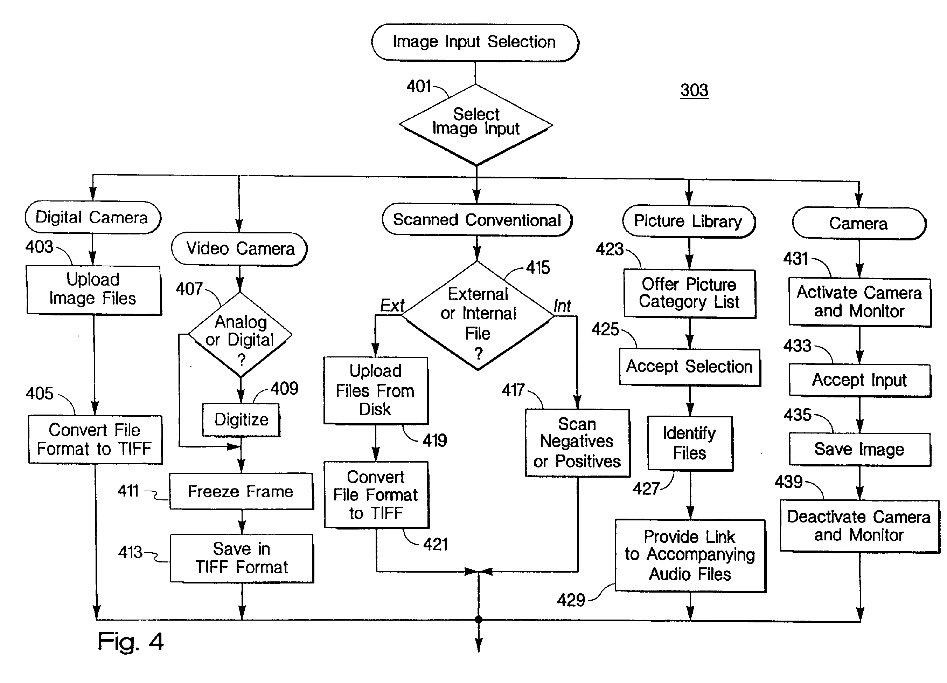

In an alternative embodiment, an example of the operation of the kiosk is as follows, with reference to FIG. 3. The user approaches the kiosk in the retail store. In hand, the user has a digital camera and a credit card with which to authorize payment. When the transaction payment is completed, at 301, a selection of input ports for image content is made, at 303. The process of image input selection, in the preferred embodiment, is shown in the flowchart of FIG. 4. A presentation of the possible inputs is presented to the user to enable the user to select an input, at 401. If the selection of image inputs is of a digital camera, the user is prompted to connect the video and audio outputs of the camera to the appropriate connectors on the kiosk. The user is then prompted to upload, at 403, the image files stored in the digital camera. If the files are not in the TIFF format, they are converted at 405. If the selection is of a video camera, such as a camcorder, the user is prompted to connect the video camera's video and audio outputs to the appropriate connectors of the kiosk and a determination is made, at 407, whether the input is in analog or digital form. If the input is analog, the video is digitized in conventional fashion, at 409, and the user is provided the opportunity to select one frame of video, in conventional fashion at freeze frame 411, to be selected as the image to be printed. The frame is saved, at 413, in TIFF format. If the selection is of a conventional photographic film media, a further decision is made whether the film has already been scanned to digitize the image and presented to the kiosk on a storage medium such as a compact disk, or presented to the kiosk as a film negative or positive print or slide, at 415. When the selection is of an internal file the physical input is scanned as positive prints/negatives, at 417. If the files are external, the picture files are uploaded from the external disk, at 419, and the files converted to TIFF format, at 421, if necessary. If the selection is to browse the library of prestored pictures in the kiosk's picture library, the user is presented with a list of picture categories, at 423, and a selection of one of the categories is accepted, at 425. The files of pictures of that category are identified, at 427, and a link to audio files which are associated with the pictures is provided, at 429. In kiosks that are equipped with an internal camera, the selection of the internal camera option by the user activates the camera and the computer monitor, at 431, to provide the user a video image of what is being observed by the camera. When the user is happy with the picture shown on the monitor, the user presses the snapshot button, at accept input 433, to cause the kiosk to save the image at 437. This process may be repeated until the user decides that enough snapshots have been taken or for a predetermined maximum number of times (in a preferred embodiment 24 times). The camera and monitor are deactivated for the snapshot purpose, at 439, and the pictures are saved in TIFF format.

Returning to FIG. 3, the user may want to input more images, so a test is made, at 304, to determine whether additional input is desired. Once the images are input from the selection step 303, the display of images in thumbnail format is made to the user, at 305, and the user's selection of one of the images is accepted, at 307. The selected image is displayed as a full-screen image on the monitor 203, at 309, to enable the user to modify and enhance the image and to crop and scale the image to fit the hardcopy output medium size, at 311. The user then is prompted to consider the data file to be encoded and placed on the hardcopy output medium. Usually, the data file is located on the opposite side of the medium, such as would be desired for a postcard.

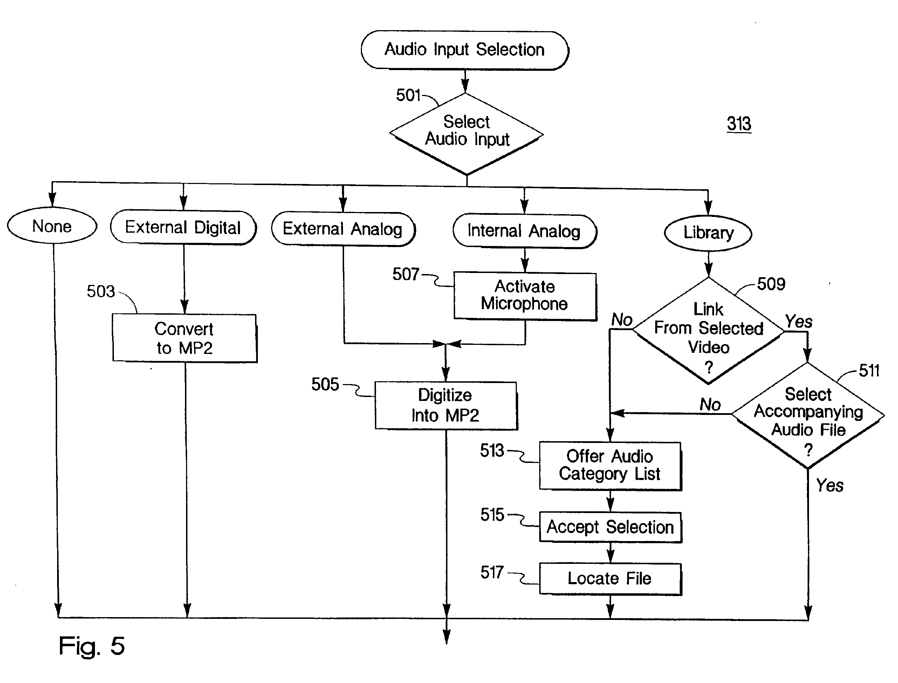

An audio input selection is offered, at 313, should the user desire to include an audio file. The process of audio input selection is further illustrated in the flowchart of FIG. 5. In an alternative embodiment, the selection, at 501, is among none, external digital audio, external analog audio, internal analog, and a library of audio files. If the selection is of an external digital audio source, the user is prompted to connect the source to a digital connector on the kiosk. (This connection may already have been made in connecting the digital camera or digital video camera). The external digital source is then activated and the audio file is input to the kiosk. If the file is not in an MPEG-1 layer 2 (MP2) format in a preferred embodiment, it is converted to an MP2 file, at 503. Similarly for an external analog audio source: the source is connected, activated, and the audio signal is digitized, at 505, into an MP2 file. A kiosk microphone may be used to record an audio file for encoding and printing on the hardcopy output and a selection of that mode results in the activation of a microphone, at 507, prior to the digitization of the audio into an MP2 file, at 505. A selection of a library of sound files may be made and a test is made, at 509, to see if a link from a selected prestored video file has been established. If such a link exists, the user is given the option, at 511, of selecting this file to be encoded and placed on the hardcopy output medium. If no link has been set from a selected video or if the user does not want to use the linked audio file, the user is offered, at 513, a listing of audio file categories. The user can make the selection, which is accepted, at 515, and a selected audio file is located, at 517. The user may, optionally, listen to the file before making a final selection. Once the audio file has been selected from any of the sources, if at all, the file is encoded into a data file suitable for printing on the hardcopy output medium, at 315.

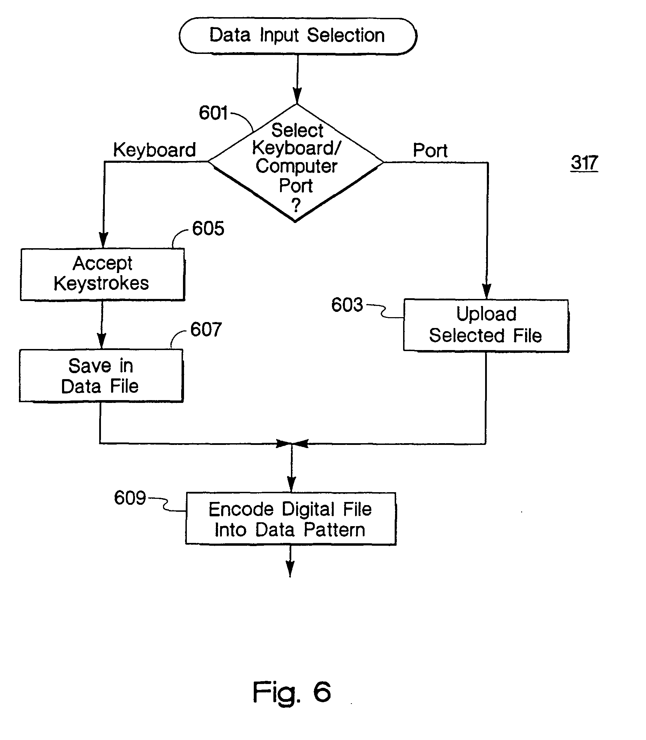

The user may elect to add a data file containing text or other information in place of or in addition to the audio file. Selection of a data input source, at 317, is illustrated in the flowchart of FIG. 6. The user may enter a text message from the kiosk keyboard 205 or may upload a computer data file from an external computer or storage medium. The selection is made by the user, at 601. If an external computer source is selected, the user is instructed to plug the computer output port, or wireless equivalent, to the kiosk port. If the file is stored on portable medium, the medium is inserted into, for example, the disk reader of the kiosk and, in either event, the desired file is uploaded, at 603. If the user desires to type in a message, the keyboard option is selected and the keyboard is used to cause the kiosk to accept the user's keystrokes, at 605. The completed message is stored in a word processing format in a data file, at 607. The data file from either input is encoded into the data pattern, at 609, for printing on the hardcopy output medium.

If the hardcopy output medium is to be a postcard and the user has paid a postage fee, a postal frank grant is accessed. The document is composed, at 320, by the kiosk computer document composer. The print driver is then activated, at 321, and the image is printed on a first side of the hardcopy output medium, at 323. The print driver is again invoked, at 325, and the encoded data pattern and the postal frank is printed on the opposite, second, side of the hardcopy output medium, at 327. The hardcopy output medium is then ejected, at 329, for collection by the user.

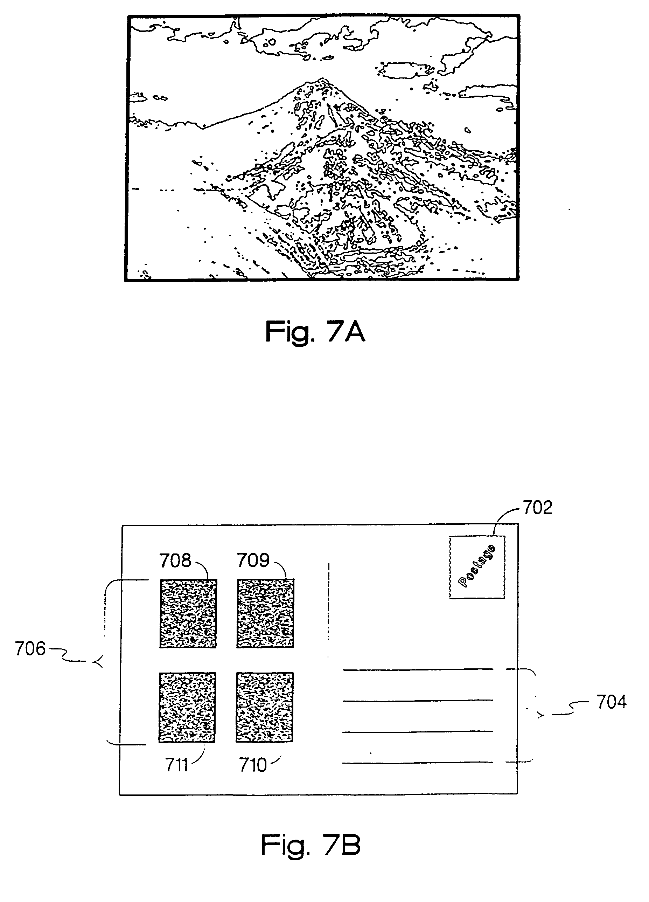

An example of a hardcopy output medium is shown in FIGs. 7A and 7B. A preferred embodiment of the output medium is a postcard, as shown, although other hardcopy output, such as picture strings and QSL cards may also be created. On a first, picture, side of the illustrated postcard, a picture image has been printed in accordance with the user's image selection. Although reproduced only in grayscale here, the picture is preferably a color picture. On the opposite side, a postal frank 702 has been conventionally printed and an address 704 has been printed from a non-encoded text file. An encoded data file 706 has been printed on this side opposite the printed picture. Four separate encoded data file blocks 708, 709, 710, and 711 are illustrated, but the number of file blocks can range from one to any reasonable number.

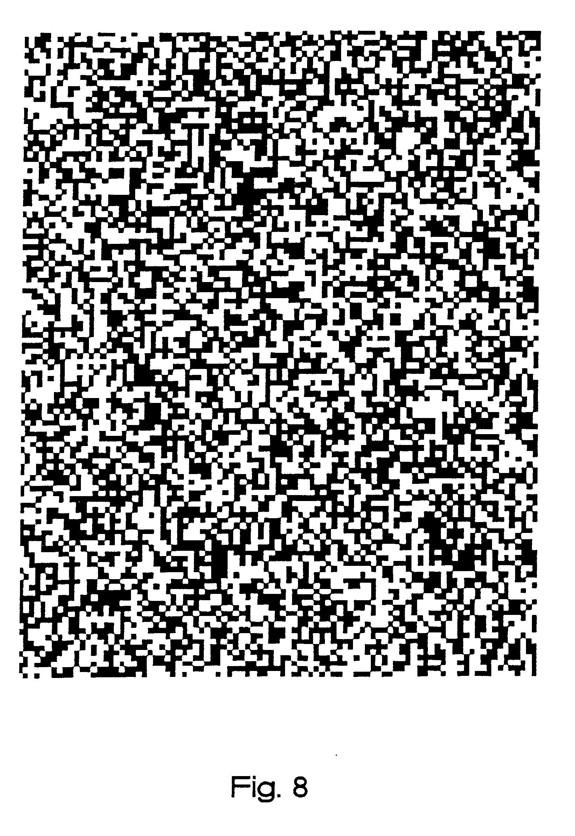

An encoded and printed data file is illustrated in an enlarged version in FIG. 8. In this figure, only a black mark or a white space in each printable (and readable) pixel are used to represent a data bit for ease of reproduction in this specification. A preferred embodiment employs superpixels for encoded storage, each superpixel contains a plurality of marks that create a printed grayscale. Moreover, each superpixel can contain color marks (for example in inkjet printers, cyan, magenta, and yellow in addition to black) which further provide encoding depth for increased storage capacity. Further discussion regarding color superpixel art can be found in US Patent Nos. 4,930,018 and 5,031,050 and in Output Hardcopy Devices, (Ed. Durbeck and Sherr) Academic Press, San Diego, 1988, pp. 350-352.

The illustrated postcard, after it is received by its intended recipient, can be exposed to a conventional computer scanner (which in a preferred embodiment having a color data encoding scheme) such as a ScanJet 5370C available from Hewlett-Packard Company. The printed and stored data file is read by the scanner and operated upon by an applications program such as Intacta Express^{™} Decoder available from Intacta Technologies, Inc. The recovered file(s) can subsequently be opened by the corresponding image, audio, or text applications program(s) to obtain the original information.

Thus a process and apparatus for placing a richer variety of information on a printable medium such as a correspondence card has been shown and described. Such a correspondence card generally has a picture or graphic printed on one side and an encoded storage of a digital file printed on the other side.

## Claims

1. Apparatus that prints user specified material on a hardcopy medium having at least two sides, comprising:
an image processor (113) that inputs and corrects at least one user specified image into a processed image digital file;
an encoder (123) that converts said, processed image digital file and at least one user specified digital file into corresponding patterns; and
a printing device (103) coupled to said image processor and coupled to said encoder to print said user specified image from said processed image digital file on a first side of the hardcopy medium and print said corresponding patterns as a plurality of machine readable marks on a second side of the hardcopy medium.

2. Apparatus in accordance with claim 1 further comprising a sound processor (119) coupled to said encoder to create an audio digital file for specification as said at least one user specified digital file

3. Apparatus in accordance with claim 1 further comprising an data processor (121) coupled to said encoder to create a data digital file of text for specification as said at least one user specified digital file.

4. Apparatus in accordance with claim 1 further comprising an interface device (127) by which a user may enter formatting commands at least to said image processor.

5. A method of creating user specified material on a hardcopy medium having at least two sides, comprising the steps of:
selecting (303, 304, 307) at least one image file;
encoding said at least one image file; providing a link to enable user selection of a digital file;
encoding (315) a user selected digital file
printing (323) an image from said selected at least one image file on a first surface of the hardcopy medium; and
printing (327) said at least one encoded image file and said encoded user selected digital file as a plurality of machine readable marks on a second surface of the hardcopy medium.

6. A method in accordance with the method of claim 5 further comprising the step of accepting a selection of a digital audio file for encoding as a user related digital file.

7. A method in accordance with the method of claim 5 further comprising the step of accepting a selection of input data for encoding as a user selected digital file.

8. A method in accordance with the method of claim 5 wherein said step of encoding said user selected digital file further comprises the step of encoding said user selected digital file into a pattern.

9. A method in accordance with the method of claim 8 wherein said step of printing said encoded file further comprises the step of depositing said pattern as said plurality of machine readable marks.

10. A correspondence medium having at least two visible surfaces, comprising:
a user-selected image printed upon the user's command on a first visible surface of the correspondence medium;
a postal frank (702) printed upon the user's command on a second visible surface of the correspondence medium; and
data representing said user selected image and a user-selected digital file, encoded in the form of machine-readable marks (706), disposed on said second visible surface of the correspondence medium and spaced apart from said postal frank.

11. A correspondence medium in accordance with claim 10 wherein said user-selected data further comprises a digital audio file.

12. A correspondence medium in accordance with claim 10 wherein said user-selected file further comprises a digital file of input data.

## Patentansprüche

1. Vorrichtung, die benutzerspezifiziertes Material auf ein Druckkopiemedium druckt, das zumindest zwei Seiten aufweist, die folgende Merkmale umfasst:
einen Bildprozessor (113), der zumindest ein benutzerspezifiziertes Bild in eine digitale Datei eines verarbeiteten Bilds eingibt und korrigiert;
einen Codierer (123), der die digitale Datei des verarbeiteten Bilds und zumindest eine benutzerspezifizierte digitale Datei in entsprechende Muster umwandelt; und
eine Druckvorrichtung (103), die mit dem Bildprozessor gekoppelt ist und mit dem Codierer gekoppelt ist, um das benutzerspezifizierte Bild von der digitalen Datei des verarbeiteten Bilds auf eine erste Seite des Druckkopiemediums zu drucken und die entsprechenden Muster als eine Mehrzahl von maschinenlesbaren Markierungen auf eine zweite Seite des Druckkopiemediums zu drucken.

2. Vorrichtung gemäß Anspruch 1, die ferner einen Schallprozessor (119) umfasst, der mit dem Codierer gekoppelt ist, um eine digitale Audiodatei für eine Spezifikation als die zumindest eine benutzerspezifizierte digitale Datei zu erzeugen.

3. Vorrichtung gemäß Anspruch 1, die ferner einen Datenprozessor (121) umfasst, der mit dem Codierer gekoppelt ist, um eine digitale Datendatei von Text für eine Spezifikation als die zumindest eine benutzerspezifizierte digitale Datei zu erzeugen.

4. Vorrichtung gemäß Anspruch 1, die ferner eine Schnittstellenvorrichtung (127) umfasst, durch die ein Benutzer Formatierbefehle zumindest in den Bildprozessor eingeben kann.

5. Ein Verfahren zum Erzeugen von benutzerspezifiziertem Material auf einem Druckkopiemedium, das zumindest zwei Seiten aufweist, das folgende Schritte umfasst:
Auswählen (303, 304, 307) von zumindest einer Bilddatei;
Codieren der zumindest einen Bilddatei;
Bereitstellen einer Verbindung zum Ermöglichen einer Benutzerauswahl von einer digitalen Datei;
Codieren (315) einer benutzerausgewählten digitalen Datei;
Drucken (323) eines Bilds von der ausgewählten zumindest einen Bilddatei auf eine erste Oberfläche des Druckkopiemediums; und
Drucken der zumindest einen codierten Bilddatei und der codierten benutzerausgewählten digitalen Datei als eine Mehrzahl von maschinenlesbaren Markierungen auf eine zweite Oberfläche des Druckkopiemediums.

6. Ein Verfahren gemäß dem Verfahren von Anspruch 5, das ferner den Schritt des Annehmens einer Auswahl einer digitalen Audiodatei zum Codieren als eine benutzerbezogene digitale Datei umfasst.

7. Ein Verfahren gemäß dem Verfahren von Anspruch 5, das ferner den Schritt des Annehmens einer Auswahl von Eingabedaten zum Codieren als eine benutzerausgewählte digitale Datei umfasst.

8. Ein Verfahren gemäß dem Verfahren von Anspruch 5, bei dem der Schritt des Codierens der benutzerausgewählten digitalen Datei ferner den Schritt des Codierens der benutzerausgewählten digitalen Datei in ein Muster umfasst.

9. Ein Verfahren gemäß dem Verfahren von Anspruch 8, bei dem der Schritt des Druckens der codierten Datei ferner den Schritt des Aufbringens des Musters als die Mehrzahl von maschinenlesbaren Markierungen umfasst.

10. Ein Korrespondenzmedium, das zumindest zwei sichtbare Oberflächen aufweist, das folgende Merkmale umfasst:
ein benutzerausgewähltes Bild, das auf Befehl des Benutzers hin auf eine erste sichtbare Oberfläche des Korrespondenzmediums gedruckt wird;
einen Postfreistempel, der auf Befehl des Benutzers hin auf eine zweite sichtbare Oberfläche des Korrespondenzmediums gedruckt wird; und
Daten, die das benutzerausgewählte Bild darstellen, und eine benutzerausgewählte digitale Datei, die in der Form von maschinenlesbaren Markierungen (706) codiert ist, die auf der zweiten sichtbaren Oberfläche des Korrespondenzmediums angeordnet ist und von dem Postfreistempel beabstandet ist.

11. Ein Korrespondenzmedium gemäß Anspruch 10, bei dem die benutzerausgewählten Daten ferner eine digitale Audiodatei umfassen.

12. Ein Korrespondenzmedium gemäß Anspruch 10, bei dem die benutzerausgewählte Datei ferner eine digitale Datei von Eingabedaten umfasst.

## Revendications

1. Appareil qui imprime un élément spécifié par l'utilisateur sur un support papier ayant au moins deux côtés, comprenant :
un processeur d'images (113) qui entre et corrige au moins une image spécifiée par l'utilisateur dans un fichier numérique d'images traitées ;
un codeur (123) qui convertit ledit fichier numérique d'images traitées et au moins un fichier numérique spécifié par l'utilisateur en des motifs correspondants ; et
un dispositif d'impression (103) couplé audit processeur d'images et couplé audit codeur pour imprimer ladite image spécifiée par l'utilisateur provenant dudit fichier numérique d'images traitées sur un premier côté du support papier et imprimer lesdits motifs correspondants en tant qu'une pluralité de marques lisible par machine sur un second côté du support papier.

2. Appareil selon la revendication 1, comprenant en outre un processeur vocal (119) couplé audit codeur pour créer un fichier audionumérique pour spécification en tant que ledit au moins un fichier numérique spécifié par l'utilisateur.

3. Appareil selon la revendication 1, comprenant en outre un processeur de données (121) couplé audit codeur pour créer un fichier numérique de données de texte pour spécification en tant que ledit au moins un fichier numérique spécifié par l'utilisateur.

4. Appareil selon la revendication 1, comprenant en outre un dispositif d'interface (127) au moyen duquel un utilisateur peut entrer des commandes de formatage au moins dans ledit processeur d'images.

5. Procédé de création d'un élément spécifié par l'utilisateur sur un support papier ayant au moins deux côtés, comprenant les étapes consistant à :
sélectionner (303, 304, 307) au moins un fichier d'images ;
coder ledit au moins un fichier d'images ;
fournir un lien pour permettre la sélection par l'utilisateur d'un fichier numérique ;
coder (315) un fichier numérique sélectionné par l'utilisateur ;
imprimer (323) une image provenant dudit au moins un fichier d'images sélectionné sur une première surface du support papier ; et
imprimer (327) ledit au moins un fichier d'images codées et ledit fichier numérique sélectionné par l'utilisateur codé en tant qu'une pluralité de marques lisibles par machine sur une seconde surface du support papier.

6. Procédé selon le procédé de la revendication 5, comprenant en outre l'étape consistant à accepter une sélection d'un fichier audionumérique pour codage en tant qu'un fichier numérique sélectionné par l'utilisateur.

7. Procédé selon le procédé de la revendication 5, comprenant en outre l'étape consistant à accepter une sélection de données d'entrée pour codage en tant qu'un fichier numérique sélectionné par l'utilisateur.

8. Procédé selon le procédé de la revendication 5, dans lequel ladite étape de codage dudit fichier numérique sélectionné par l'utilisateur comprend l'étape de codage dudit fichier numérique sélectionné par l'utilisateur en un motif.

9. Procédé selon le procédé de la revendication 8, dans lequel ladite étape d'impression dudit fichier codé comprend l'étape consistant à déposer ledit motif en tant que ladite pluralité de marques lisibles par machine.

10. Support de correspondance ayant au moins deux surfaces visibles, comprenant :
une image sélectionnée par l'utilisateur imprimée sur demande de l'utilisateur sur une première surface visible du support de correspondance ;
une empreinte d'affranchissement (702) imprimée sur demande de l'utilisateur sur une seconde surface visible du support de correspondance ; et
des données représentant ladite image sélectionnée par l'utilisateur et
un fichier numérique sélectionné par l'utilisateur codé sous la forme de marques lisibles par machine (706), disposé sur ladite seconde surface visible du support de correspondance et espacé de ladite empreinte d'affranchissement.

11. Support de correspondance selon la revendication 10, dans lequel lesdites données sélectionnées par l'utilisateur comprennent en outre un fichier audionumérique.

12. Support de correspondance selon la revendication 10, dans lequel ledit fichier sélectionné par l'utilisateur comprend en outre un fichier numérique de données d'entrée.
